# FASCICULE DE BREVET EUROPEEN

(11) **EP 1 018 918 B1**
(45) Date de publication et mention de la délivrance du brevet: **16.07.2003**
(21) Numéro de dépôt: 98947595.9
(22) Date de dépôt: 02.10.1998
(51) Int. Cl.: A47J 43/046, A47J 36/10, A47J 27/08

(54) **APPAREIL ELECTROMENAGER DE PREPARATION CULINAIRE, DU GENRE ROBOT MENAGER, COMPORTANT UN DISPOSITIF DE VERROUILLAGE ET DE DEVERROUILLAGE SIMPLIFIE**
ELEKTRISCHES HAUSHALTSGERÄT ZUM ANWENDEN IN DER KÜCHE MIT EINER VEREINFACHTEN ENT- UND VERRIEGELUNGSVORRICHTUNG
HOUSEHOLD ELECTRIC COOKING APPLIANCE, SUCH AS A FOOD PROCESSOR, COMPRISING A SIMPLIFIED LOCKING AND UNLOCKING DEVICE

(30) Priorité: 03.10.1997 FR 9712569; 03.10.1997 FR 9712566
(43) Date de publication de la demande: 19.07.2000
(73) Titulaire: SEB S.A., 69130 Ecully (FR)
(72) Inventeur: CHARLES, Patrick, F-65290 Louey (FR); SMIT, Robert, F-65100 Lourdes (FR); BORDES, Jean-Luc, F-65100 Ade (FR); BINEAU, Pierre, F-65800 Asson (FR); GAUDEZ, Philippe, F-69008 Lyon (FR); JURADO, Manuel, F-64140 Lons (FR)
(74) Mandataire: Kiehl, Hubert
(86) Numéro de dépôt international: FR9802115
(87) Numéro de publication internationale: WO99017647

(56) Documents cités:
- EP-A- 0 491 324
- EP-A- 0 549 818
- WO-A-92/03080
- CH-A- 254 203
- DE-A- 3 327 439
- DE-C- 896 409
- DE-U- 29 510 989

## Description

### DOMAINE TECHNIQUE

La présente invention concerne un appareil électroménager de préparation culinaire, du genre robot ménager, comportant un corps comprenant un bloc moteur, un récipient de travail prévu pour recevoir un organe rotatif de travail entraîné par le bloc moteur, ainsi qu'un couvercle susceptible d'être verrouillé sur le récipient de travail.

Par appareil électroménager de préparation culinaire, du genre robot ménager, on entend un appareil prévu pour réaliser des préparations hachées, des mélanges, ou encore des préparations râpées ou émincées.

### TECHNIQUE ANTERIEURE

Le document EP 0 549 818 décrit un appareil électroménager de préparation culinaire comprenant un récipient de travail verrouillé sur un corps au moyen d'un système de fixation à baïonnette, un couvercle verrouillé sur le récipient de travail au moyen d'un système de fixation à baïonnette, le couvercle comportant une languette s'engageant dans une fente d'un boîtier formant une partie proéminente du corps pour actionner un dispositif de sécurité autorisant le fonctionnement de l'appareil.

Une telle réalisation permet le maintien du récipient de travail sur le corps lors du fonctionnement de l'appareil et évite de solliciter mécaniquement la languette actionnant le dispositif de sécurité, mais présente l'inconvénient de demander à l'utilisateur deux mouvements de verrouillage associant chacun un positionnement précis du récipient par rapport au corps, ou du couvercle par rapport au récipient, suivi d'une rotation du récipient par rapport au corps, ou du couvercle par rapport au récipient. Une telle réalisation demande également que l'utilisateur maintienne le corps de l'appareil ou le récipient lorsqu'il souhaite ôter le récipient du corps de l'appareil ou encore déverrouiller le couvercle du récipient. De plus lorsque le couvercle comprend une cheminée prévue pour introduire des ingrédients dans le récipient de travail, la position de celle-ci est déterminée par la position du couvercle permettant le fonctionnement de l'appareil. L'utilisateur ne peut pas choisir la position du couvercle.

Le document FR 2 340 706 décrit un appareil électroménager de préparation culinaire comportant un socle dont la partie supérieure constitue un siège de réception d'un accessoire amovible, tel qu'un coupe légume, ledit accessoire comportant un boîtier formant récipient de travail et un couvercle coiffant le boîtier. Le couvercle est verrouillé au moyen de deux verrous diamétralement opposés, du type dit à genouillère, comportant chacun un crochet dont le bec vient en prise avec une oreille du socle et qui est articulé au couvercle par l'intermédiaire d'un étrier basculant interposé entre un bossage de ce couvercle et l'extrémité de ce crochet opposée à son bec. Le moteur est commandé par un interrupteur dont la touche de manoeuvre est située sur la partie supérieure du socle et est actionnée au moyen d'un poussoir monté mobile sur le crochet de verrouillage, par l'intermédiaire d'une transmission montée dans le boîtier de l'accessoire.

Cette construction présente l'inconvénient de proposer un appareil comprenant un récipient de travail comportant des moyens de transmission servant à actionner le moteur de l'appareil. Le nettoyage dudit récipient n'est pas facilité par cette disposition. De plus, un positionnement précis du couvercle, du récipient de travail et du socle de l'appareil est nécessaire pour procéder au verrouillage du couvercle sur le socle.

Le document FR 2 370 456 décrit un mélangeur électroménager comprenant un récipient de travail disposé sur un socle et fermé par un couvercle, le verrouillage du couvercle étant assuré par un levier d'actionnement pivotant autour d'un axe horizontal et s'appliquant par un palier mobile contre un levier de verrouillage, lequel pivote autour d'un palier fixe et prend appui contre le couvercle. Le palier fixe peut se mouvoir librement d'une distance déterminée dans le sens axial. Partant dudit palier fixe une tige de commande guide un interrupteur jusqu'à un bouton d'actionnement du circuit commandant le moteur de l'appareil.

Une telle réalisation offre l'avantage de proposer un appareil dans lequel le couvercle peut être disposé sur le récipient de travail sans orientation précise, le récipient de travail pouvant être également disposé sans orientation précise sur le socle. Cette réalisation présente toutefois l'inconvénient de commander le verrouillage et le déverrouillage par la rotation d'un levier autour d'un axe horizontal, ce qui présente un risque de déséquiiibrer l'appareil iors des opérations de verrouillage ou de déverrouillage, si l'appareil n'est pas suffisamment maintenu lors de la manoeuvre du levier. De plus l'utilisation d'un levier pivotant prenant appui sur le dessus du couvercle pour verrouiller le couvercle sur le corps est difficilement envisageable pour réaliser un appareil dans lequel seront réalisées des préparations râpées ou émincées dont les ingrédients sont introduits par une cheminée ménagée dans le couvercle, et dans lequel le couvercle peut être positionné sur le récipient de travail selon une large étendue d'orientations.

### EXPOSE DE L'INVENTION

L'objet de l'invention vise en conséquence à porter remède aux différents inconvénients énumérés précédemment et à fournir un appareil électroménager de préparation culinaire dont la mise en oeuvre est particulièrement facile.

Un autre objet de l'invention vise à proposer un appareil électroménager de préparation culinaire qui offre grande liberté de positionnement du couvercle par rapport au récipient de travail.

Un autre objet de l'invention vise à proposer un appareil électroménager de préparation culinaire dont le déverrouillage puisse être effectué d'une seule main.

Un autre objet de l'invention vise à proposer un appareil électroménager de préparation culinaire qui offre une grande liberté de positionnement du récipient de travail par rapport au socle de l'appareil.

Les objets assignés à l'invention sont atteints à l'aide d'un appareil électroménager de préparation culinaire, du genre robot ménager comportant un corps formant un socle prévu pour recevoir un récipient de travail dans lequel est susceptible d'être disposé un organe de travail rotatif entraîné par un moteur disposé dans le corps, un couvercle prévu pour fermer le récipient de travail, et des moyens de verrouillage du couvercle sur le récipient de travail disposé sur le socle, dans lequel
les moyens de verrouillage comportent au moins deux mâchoires montées mobiles sur le corps entre une position de verrouillage dans laquelle elles engagent le couvercle pour le bloquer verticalement et une position de déverrouillage dans laquelle le couvercle peut être retiré, ces mâchoires étant mobiles à l'encontre d'au moins un moyen de rappel vers l'une des deux positions,
l'appareil comportant des moyens de déverrouillage montés mobiles sur le corps entre une position de repos dans laquelle les mâchoires sont susceptibles de verrouiller le couvercle sur le récipient, et une position active dans laquelle les mâchoires sont amenées en leur position de déverrouillage.

Ainsi l'utilisateur voulant verrouiller le couvercle sur le récipient de travail de l'appareil dispose simplement le couvercle sur le récipient de travail. Le verrouillage est obtenu lorsque les mâchoires prennent leur position de verrouillage. Aucune manoeuvre particulière du couvercle n'est nécessaire pour obtenir le verrouillage. Il en résulte que l'appareil selon l'invention est d'une utilisation particulièrement simple.

Avantageusement les mâchoires sont montées symétriques par rapport à l'axe vertical passant par le centre de gravité du récipient et du couvercle.

Cette disposition permet d'assurer un verrouillage efficace du couvercle.

Avantageusement le couvercle et au moins le haut du récipient présentent une géométrie de révolution.

Cette disposition permet de réaliser un dispositif de verrouillage sans indexage. L'utilisateur n'a pas besoin d'orienter le couvercle dans une position précise pour obtenir le verrouillage dudit couvercle.

Selon un principe de réalisation les mâchoires sont associées à des moyens de rappel élastiques, la position de rappel étant la position de verrouillage.

Selon un autre principe de réalisation les mâchoires sont associées à des moyens de rappel formés par un balourd ou à des moyens de rappel élastiques, la position de rappel étant la position de déverrouillage.

Selon une forme de réalisation les moyens de déverrouillage agissent contre un moyen de rappel.

Avantageusement les moyens de déverrouillage sont formés par un bouton de déverrouillage présentant une course selon un axe sensiblement parallèle à la direction d'introduction du récipient de travail sur le socle, une telle disposition permettant d'éviter un déplacement ou un déséquilibre de l'appareil lors de la manoeuvre du bouton de déverrouillage.

Les mâchoires peuvent être montées mobiles radialement entre leur position de verrouillage et leur position de déverrouillage, ou être montées mobiles en rotation. Avantageusement les mâchoires sont au nombre de deux.

Selon un principe de réalisation l'appareil comporte des moyens de blocage mobiles entre une position de repos dans laquelle les mâchoires sont susceptibles de verrouiller le couvercle sur le récipient sous l'action des moyens de rappel, et une position active dans laquelle les mâchoires occupent leur position de déverrouillage, ainsi que des moyens de déclenchement, aptes à agir sur les moyens de blocage pour leur faire occuper leur position de repos. Cette disposition présente l'avantage de permettre le verrouillage et le déverrouillage en n'utilisant qu'une seule main.

Selon un autre principe de réalisation les mâchoires comportent un chanfrein prévu pour coopérer avec le couvercle ou le corps pour repousser les mâchoires contre les moyens de rappel lors de l'introduction du couvercle sur le récipient disposé sur le socle.

Cette disposition présente l'avantage de permettre le verrouillage par le simple mouvement vertical de mise en place du couvercle sur le récipient.

Le récipient de travail et le corps peuvent comporter des moyens de blocage en rotation inférieurs.

Cette disposition favorise le blocage en rotation du récipient par rapport au corps et évite que le récipient soit entraîné en rotation par la matière de la préparation, par exemple lors de la préparation de pâtes.

Avantageusement les moyens de blocage en rotation inférieurs sont formés par des nervures annulaires ondulées ménagées sous un fond du récipient, lesdites nervures annulaires étant prévues pour coopérer avec des nervures radiales ménagées sur le socle du corps.

Les nervures combinées avec les moyens de verrouillage bloquant verticalement le couvercle par rapport au corps sont suffisantes pour obtenir un blocage en rotation du récipient par rapport au corps. Ainsi l'utilisateur n'a pas besoin de verrouiller le récipient sur le corps. De plus les nervures ondulées de manière périodique permettent un positionnement sans indexage précis du récipient sur le socle.

Avantageusement l'appareil comporte des moyens élastiques, montés sur le couvercle ou le récipient, lesdits moyens étant susceptibles d'être déformés lorsque le couvercle est verrouillé sur le récipient, et de soulever le couvercle du récipient lorsque les mâchoires sont amenées en position de déverrouillage.

Cette disposition rend plus aisé le retrait du couvercle.

### DESCRIPTION SOMMAIRE DES DESSINS

D'autres avantages et particularités de l'invention ressortiront mieux à l'aide de la description faite ci-après, en référence aux dessins annexés qui montrent à titre d'exemples non limitatifs, des formes de réalisation de l'objet de l'invention dans lesquels :
- La figure 1a montre selon une vue partielle de face en coupe un premier exemple de réalisation d'un appareil électroménager de préparation culinaire selon l'invention, le couvercle étant soulevé du récipient de travail,
- La figure 1b montre selon une vue partielle de face en coupe un détail du premier exemple de réalisation selon la figure 1a, le couvercle étant verrouillé sur le récipient de travail,
- La figure 1c montre selon une vue partielle de dos en coupe le premier exemple de réalisation selon la figure 1a, les moyens de verrouillage étant en position de verrouillage,
- La figure 1d montre selon une vue de dessus en coupe partielle le premier exemple de réalisation selon la figure 1a, les moyens de verrouillage étant en position de verrouillage,
- La figure 1e montre selon une vue partielle de dos en coupe une variante du premier exemple de réalisation d'un appareil électroménager de préparation culinaire selon l'invention, les moyens de verrouillage étant en position de verrouillage,
- La figure 1f montre selon une vue partielle de dos en coupe de la variante selon la figure 1e, les moyens de verrouillage étant en position de déverrouillage,
- La figure 1g montre selon une vue de dessus en coupe partielle de la variante selon la figure 1e, les moyens de verrouillage étant en position de verrouillage,
- La figure 2a montre selon une vue de dessus en coupe partielle un deuxième exemple de réalisation d'un appareil électroménager de préparation culinaire selon l'invention,
- La figure 2b montre selon une vue de dessus en coupe partielle une variante d'un deuxième exemple de réalisation d'un appareil électroménager de préparation culinaire selon l'invention,
- La figure 3a montre selon une vue de dessus en coupe partielle un troisième exemple de réalisation d'un appareil électroménager de préparation culinaire selon l'invention,
- La figure 3b montre selon une vue de dessus en coupe partielle une variante d'un troisième exemple de réalisation d'un appareil électroménager de préparation culinaire selon l'invention,
- La figure 4a montre selon une vue de dessus en coupe partielle un quatrième exemple de réalisation d'un appareil électroménager de préparation culinaire selon l'invention,
- La figure 4b montre selon une vue partielle de face en coupe un détail du quatrième exemple de réalisation selon la figure 4a, dans lequel le couvercle est soulevé du récipient de travail,
- La figure 4c montre selon une vue partielle de face en coupe un détail du quatrième exemple de réalisation selon la figure 4a, dans lequel le couvercle est verrouillé sur le récipient de travail,
- La figure 5a montre selon une vue latérale partielle en coupe un cinquième exemple de réalisation d'un appareil électroménager de préparation culinaire selon l'invention, dans lequel le couvercle est soulevé du récipient de travail,
- La figure 5b montre selon une vue de dessus le cinquième exemple de réalisation selon la figure 5a, dans lequel un capot du corps de l'appareil a été ôté,
- La figure 5c montre selon une vue partielle de face en coupe un détail du cinquième exemple de réalisation selon la figure 5a, dans lequel le couvercle est soulevé du récipient de travail,
- La figure 6 montre selon une vue de coté partielle en coupe un détail d'une variante avantageuse de réalisation d'un appareil électroménager de préparation culinaire selon l'invention,
- Les figures 7a et 7b montrent selon une vue partielle en coupe une autre variante avantageuse de réalisation d'un appareil électroménager de préparation culinaire selon l'invention.

### MEILLEURE MANIERE DE REALISER L'INVENTION

L'appareil électroménager de préparation culinaire du genre robot ménager conforme à l'invention représenté aux figures comporte un corps 1 formant un socle 2 prévu pour recevoir un récipient de travail 3 d'axe de symétrie x-x' dans lequel est susceptible d'être disposé un organe de travail rotatif 4 entraîné par un moteur (non représenté aux figures) disposé dans le corps 1.

L'appareil comporte également un couvercle 5 prévu pour fermer le récipient de travail 3 et des moyens de verrouillage du couvercle 5 sur le récipient de travail 3 disposé sur le socle 2. Le couvercle 5 est avantageusement muni d'une cheminée 204 prévue pour l'introduction d'ingrédients lors de la réalisation de la préparation.

Le récipient de travail 3 comporte avantageusement une poignée 10 et une jupe périphérique inférieure 13 prévue pour coopérer avec un rebord 9 ménagé dans le socle 2. Le récipient de travail 3 comporte des parois latérales 28 et un fond 29 dans lequel est ménagée une cheminée centrale 20 prévue pour le passage des moyens d'entraînement de l'organe de travail 4.

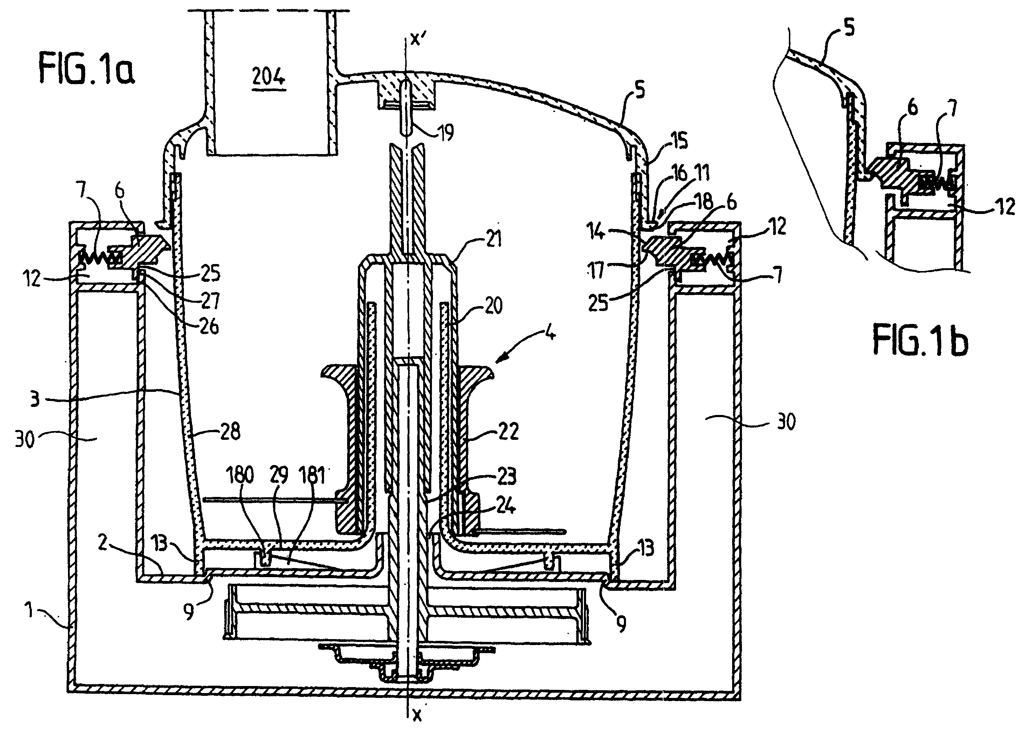

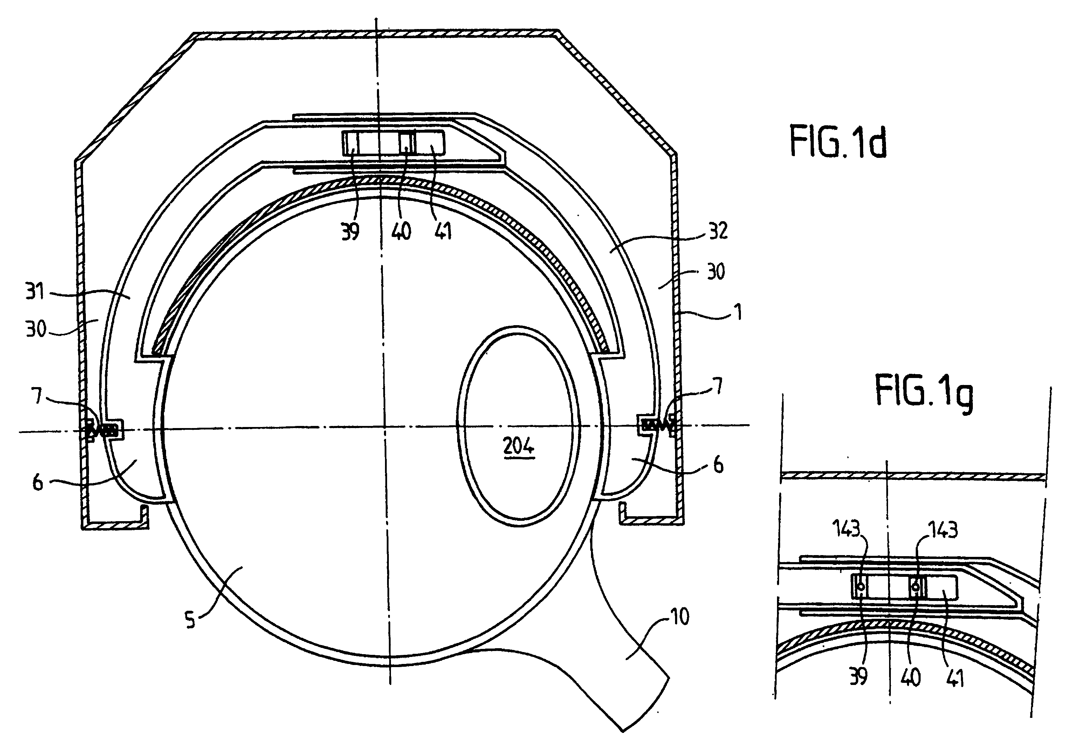

Avantageusement l'organe de travail 4 se compose d'un moyeu 21 sur lequel est monté de manière connue un outil de travail 22, tel que représenté aux figures 1a et 1b. Le moyeu 21 coopère avec une tige 19 montée dans le couvercle 5 pour stabiliser la rotation de l'organe de travail 4.

Le moteur (non représenté aux figures) disposé dans le corps 1 de l'appareil entraîne un axe de transmission 23, monté en regard d'un orifice 24 ménagé dans le socle 2, et sur lequel est monté l'organe de travail 4, tel que représenté aux figures la et 1b. Avantageusement l'appareil comporte des moyens de sécurité prévus pour autoriser le fonctionnement dudit appareil lorsque le couvercle 5 est correctement positionné sur le récipient 3.

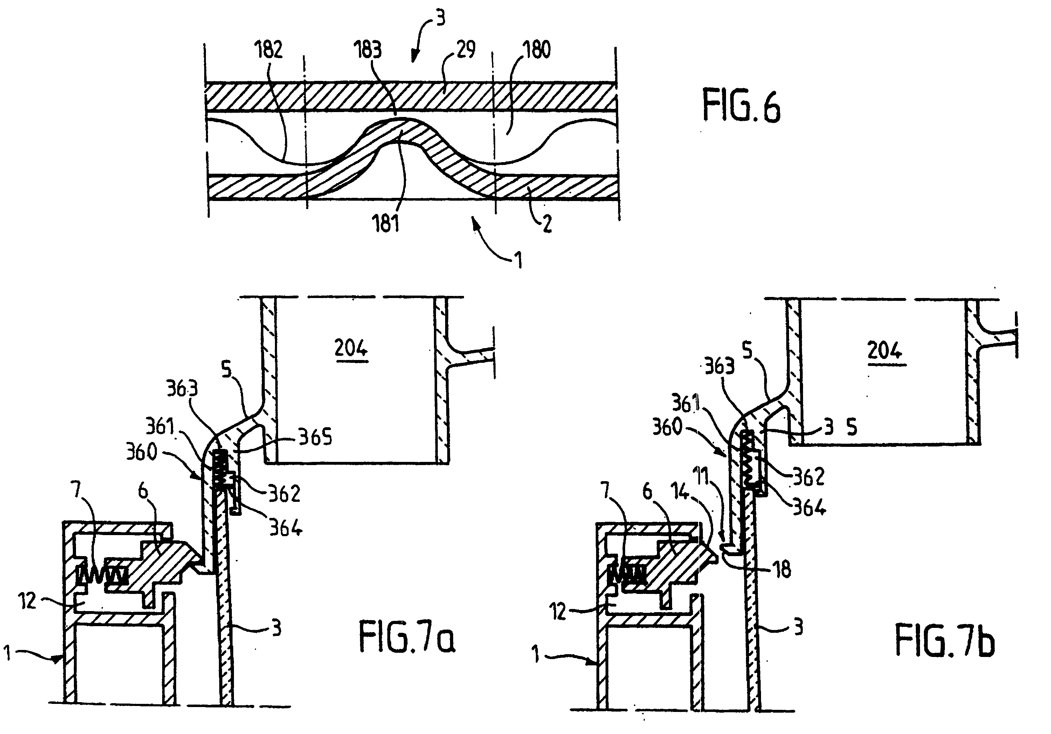

Avantageusement, tel que représenté aux figures 1a et 1b, le récipient de travail 3 et le corps 1 comportent des moyens de blocage en rotation inférieurs formés par des nervures annulaires ondulées 180 ménagées à l'extérieur du récipient 3 sous le fond 29, de préférence de manière périodique, par exemple sinusoïdale avec douze bosses 182 et douze creux 183, lesdites nervures annulaires 180 étant prévues pour coopérer avec des nervures radiales 181 ménagées sur le socle 2 pour positionner de manière stable le récipient 3 sur le socle 2 du corps 1. De façon préférentielle la courbure des nervures annulaires 180 suit la courbure des nervures radiales 181, tel que représenté à la figure 6, de manière à favoriser la rotation du récipient 3 afin d'occuper une position stable lorsque celui-ci est disposé sur le socle 2. A titre de variante d'autres moyens de blocage en rotation inférieurs, tel qu'un verrouillage à baïonnette, pourraient être envisagés.

Selon l'invention les moyens de verrouillage comportent au moins deux mâchoires 6 ; 106 montées mobiles à l'encontre d'au moins un moyen de rappel 7 entre une position de verrouillage et une position de déverrouillage, et l'appareil comporte des moyens de déverrouillage 35 ; 175 montés mobiles entre une position de repos dans laquelle les mâchoires 6 ; 106 sont susceptibles de verrouiller le couvercle 5 sur le récipient 3, et une position active, dans laquelle les mâchoires 6 ; 106 occupent leur position de déverrouillage.

Les moyens de verrouillage du couvercle 5 sur le corps 1 comportent au moins deux mâchoires 6 ; 106 montées mobiles à l'encontre d'au moins un moyen de rappel 7 entre une position de verrouillage, dans laquelle le couvercle 5 est bloqué verticalement par rapport au corps 1, et une position de déverrouillage, dans laquelle le couvercle 5 peut être retiré, les mâchoires 6 ; 106 étant associées à des moyens de déverrouillage 35 ; 175, montés mobiles entre une position de repos dans laquelle les mâchoires 6 ; 106 sont susceptibles de verrouiller le couvercle 5 sur le récipient 3, et une position active, dans laquelle les mâchoires 6 ; 106 occupent leur position de déverrouillage.

Tel que présenté aux figures 1a à 5c, les moyens de déverrouillage 35 ; 175 et les mâchoires 6 ; 106 sont montés dans le corps 1, les mâchoires 6 ; 106 s'engageant avec le couvercle 5.

Avantageusement les moyens de déverrouillage 35 ; 175 agissent contre un moyen de rappel élastique 36 ; 7. Avantageusement chaque mâchoire 6 ; 106 est associée à un moyen de rappel 7. Selon les exemples de réalisation présentés aux figures la à 4 et 5a à 5h le moyen de rappel 7 est un moyen de rappel élastique, la position de rappel correspondant à la position de verrouillage des mâchoires 6 ; 106.

Selon une variante de réalisation de différents exemptes de réalisation, l'appareil comporte en outre des moyens de blocage mobiles entre une position de repos, dans laquelle les mâchoires 6 ; 106 sont susceptibles de verrouiller le couvercle 5 sur le récipient 3, et une position active, dans laquelle les mâchoires 6 ; 106 occupent leur position de déverrouillage, ainsi que des moyens de déclenchement, aptes à agir sur les moyens de blocage pour leur faire occuper leur position de repos.

De manière générale, pour verrouiller l'appareil, l'utilisateur dispose le récipient de travail 3 sur le socle 2, par exemple en saisissant ledit récipient par la poignée 10, puis dispose l'organe de travail 4 dans le récipient 3. L'utilisateur peut aussi disposer l'organe de travail 4 dans le récipient 3 puis le récipient de travail 3 comprenant l'organe de travail 4 sur le socle 2.

Les mâchoires 6 ; 106 sont montées sur le corps 1 de l'appareil.

Tel que montré aux figures 1a à 5c, les mâchoires 6 sont avantageusement au nombre de deux et montées diamétralement en opposition par rapport à l'axe de symétrie x-x' du récipient 3 disposé sur le socle 2.

Selon une variante de réalisation, non montrée aux figures, l'appareil selon l'invention comporte plus de deux mâchoires, par exemple deux paires de mâchoires 6 montées diamétralement en opposition par rapport à l'axe de symétrie x-x' du récipient 3 disposé sur le socle 2, chaque paire de mâchoires 6 étant constituée par deux mâchoires disposées à proximité l'une de l'autre. Cette disposition permet de diminuer le volume de matière des mâchoires tout en assurant des points d'appui sur le couvercle suffisamment espacés. Avantageusement les mâchoires sont montées symétriques par rapport à l'axe vertical passant par le centre de gravité du récipient 3 et du couvercle 5. Ainsi le résultat des forces d'application des mâchoires passe par le centre de gravité.

Les figures 1a à 1d montrent un premier exemple de réalisation du premier mode de réalisation de l'invention.

Tel que représenté à la figure 1a le couvercle 5 est soulevé du récipient de travail 3. Tel que représenté à la figure 1b le couvercle 5 est verrouillé sur le récipient 3 par les mâchoires 6 repoussées par les moyens de rappel 7.

Le couvercle 5 comporte une jupe périphérique 15 présentant au moins un rebord 11 prévu pour coopérer avec les mâchoires 6. Avantageusement le rebord 11 est périphérique. Cette disposition permet de présenter le couvercle 5 sur le récipient de travail 3 sans orientation angulaire préférentielle. Selon une variante de réalisation, non montrée aux figures, au moins l'un des rebords 11 est formé par la paroi inférieure d'une cavité, débouchante ou non, ménagée dans la paroi de la jupe 15.

Tel que montré à la figure 1a, les mâchoires 6 sont montées mobiles radialement dans des logements 12 du corps 1 desquels elles sont susceptibles de déboucher par des ouvertures 25. Chaque mâchoire 6 comporte avantageusement une butée 26 susceptible de coopérer avec une paroi 27 du logement 12 pour limiter la course de ladite mâchoire repoussée par le moyen de rappel 7.

Tel que montré à la figure 1a les logements 12 sont ménagés dans des montants 30 issus du socle 2. A titre de variante, non montrée aux figures les montants 30 peuvent être remplacés par des bras issus d'une colonne elle-même issue du socle 2.

Chaque rebord 11 présente de manière avantageuse un méplat supérieur 16 prévu pour coopérer avec un méplat inférieur 17 ménagé sur chacune des mâchoires 6. Avantageusement chaque rebord 11 comporte un chanfrein inférieur 18 prévu pour repousser la mâchoire 6 contre le moyen de rappel 7 lors de la mise en place du couvercle 5 sur le récipient de travail 3. Avantageusement chaque mâchoire 6 comporte un chanfrein supérieur 14 prévu pour faciliter le glissement du rebord 11 sur ladite mâchoire lors de la mise en place du couvercle 5 sur le récipient de travail 3.

Chacune des deux mâchoires 6 est montée sur un bras 31, 32. Tel que représenté à la figure 1d le premier bras 31 coulisse axialement sur le second bras 32. Chaque bras 31, 32 porte l'une des mâchoires 6. A titre de variante chaque bras 31, 32 pourrait porter plusieurs mâchoires 6.

Les moyens de déverrouillage comprennent un bouton de déverrouillage 35 monté dans le corps 1 contre un moyen de rappel 36. Le bouton de déverrouillage 35 comporte deux surfaces de came 37, 38 susceptibles de repousser respectivement une première surface de came 39 ménagée sur le premier bras 31 et une deuxième surface de came 40 ménagée sur le second bras 32, le premier bras 31 comportant une ouverture 41 prévue pour le passage de la deuxième surface de came 40 ou de la surface de came 38. Le bouton de déverrouillage 35 est mobile à l'encontre du moyen de rappel 36 entre une position de repos, dans laquelle les mâchoires 6 sont susceptibles de verrouiller le couvercle 5 sur le récipient 3, et une position active correspondant à la position de rappel, dans laquelle les mâchoires 6 occupent leur position de déverrouillage et le couvercle 5 peut être retiré du récipient 3.

Avantageusement le bouton de déverrouillage 35 comporte une surface d'actionnement 44 émergeant sur une face du corps 1, le second bras 32 comportant également une ouverture 42 prévue pour le passage d'une partie 45 du bouton 35, par exemple à des fins de guidage dans un conduit 46 disposé par rapport aux bras 31, 32 à l'opposé de la surface d'actionnement 44. De manière avantageuse le bouton de déverrouillage 35 présente une course selon un axe sensiblement parallèle à la direction d'introduction du récipient de travail 3 sur le socle 2.

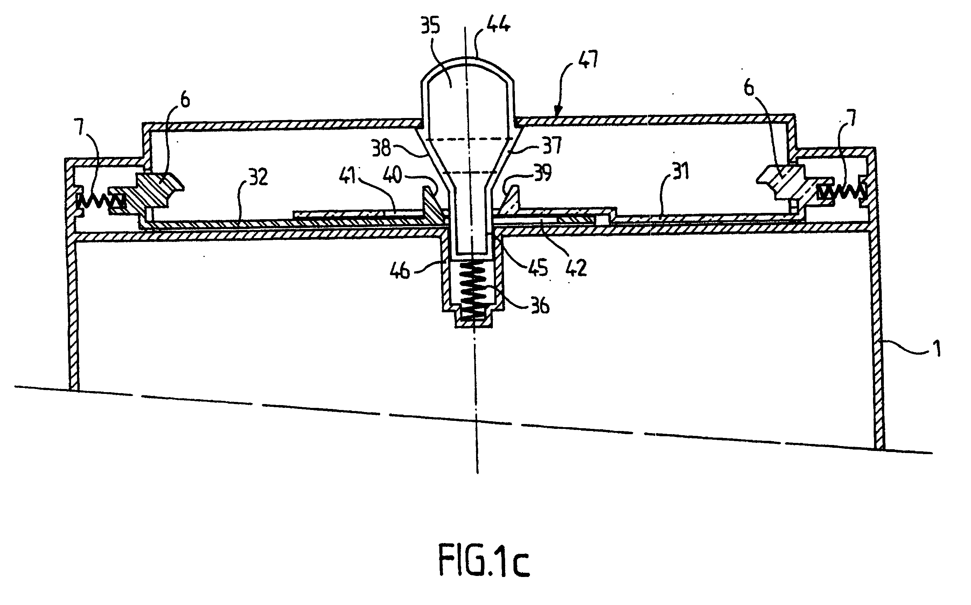

Avantageusement tel que représenté à la figure 1c la surface d'actionnement 44 est disposée sur une face supérieure 47 du corps 1 de l'appareil, de préférence à l'intérieur du périmètre déterminé par les points d'appui de l'appareil sur son support de travail (non représentés aux figures). Cette disposition permet une grande stabilité de l'appareil lorsque l'utilisateur appuie sur la surface d'actionnement 44 afin d'amener les mâchoires 6 dans leur position de déverrouillage.

Le fonctionnement du premier exemple de réalisation est le suivant :

Pour verrouiller l'appareil l'utilisateur dispose selon un mouvement vertical le couvercle 5 sur le récipient 3 mis en place sur le socle 2.

Lorsque le rebord 11 du couvercle 5 présente un chanfrein inférieur 18 et les mâchoires 6 présentent un chanfrein supérieur 14, l'utilisateur appuie simplement sur le couvercle 5 pour repousser les mâchoires 6, les bras 31, 32 glissant l'un dans l'autre. Lorsque le méplat inférieur 17 des mâchoires 6 a dépassé le méplat supérieur 16 du rebord 11, les moyens de rappel 7 ramènent les mâchoires 6 sur le rebord 11 et le couvercle 5 est verrouillé.

Lorsque le contact du rebord 11 avec les mâchoires 6 n'est pas suffisant pour repousser lesdites mâchoires, l'utilisateur doit appuyer sur le bouton de déverrouillage 35 pour écarter les bras 31, 32 portant les mâchoires 6 avant de disposer le couvercle 5 sur le récipient 3.

Pour déverrouiller l'appareil l'utilisateur appuie sur le bouton de déverrouillage 35 d'une main. Il peut alors retirer de l'autre main le couvercle 5 du récipient 3, ou encore le récipient 3 surmonté du couvercle 5 du socle 2, par exemple en tenant le récipient 3 par la poignée 10.

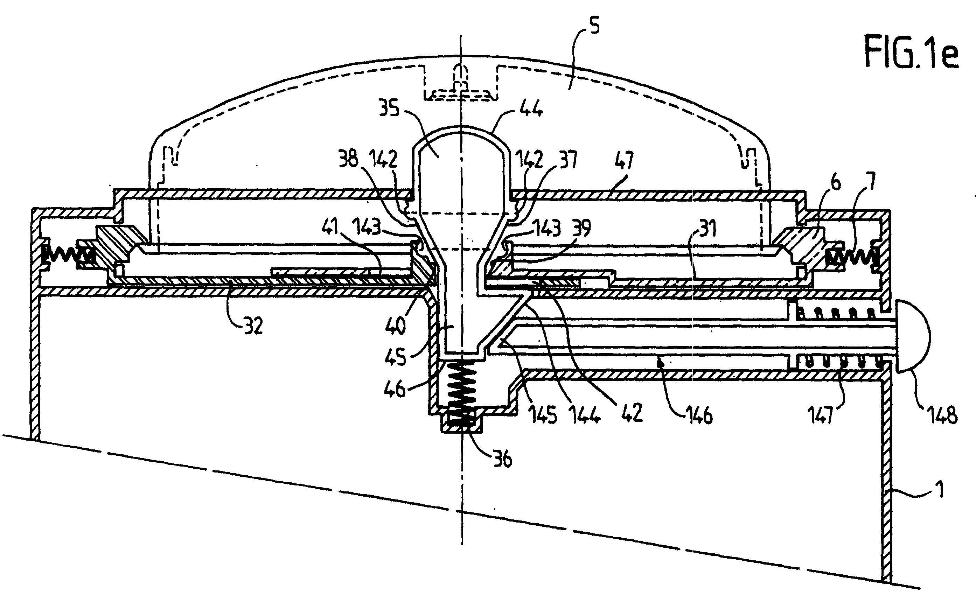

Les figures 1e à 1g montrent une variante de réalisation du premier exemple de réalisation du premier mode de réalisation de l'invention, comportant des moyens de blocage et des moyens de déclenchement.

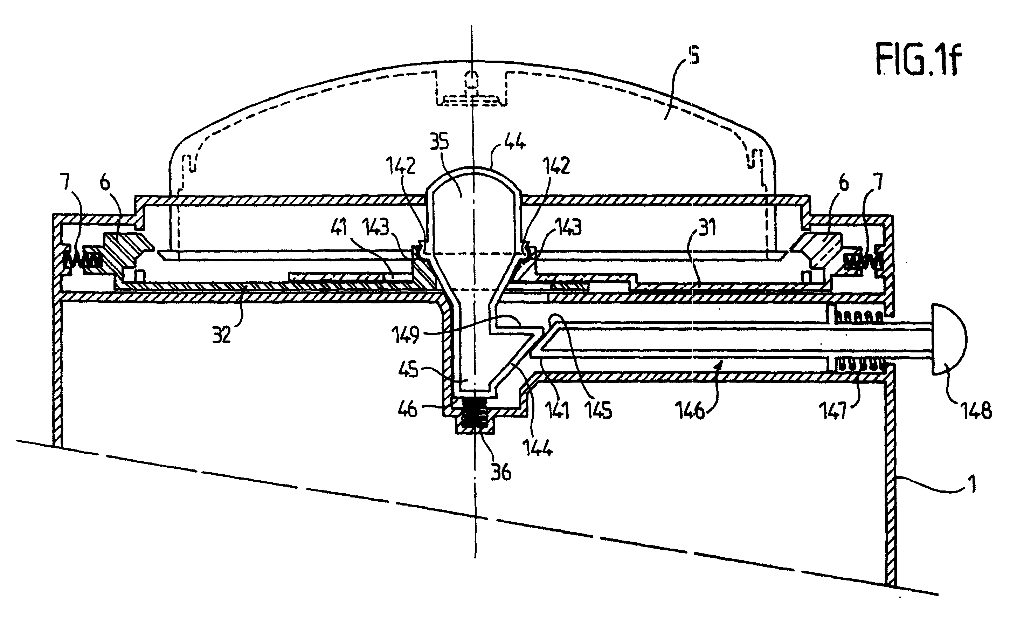

Les moyens de blocage sont constitués par des ergots 142 ménagés sur les surfaces de came 37, 38 du bouton de déverrouillage 35 et sont prévus pour coopérer avec des cavités 143 ménagées sur les surfaces de came 39, 40 des bras 31, 32. Le bouton de déverrouillage 35 comporte une autre surface de came 144 prévue pour coopérer avec l'extrémité 145 d'une tige 146 formant le moyen de déclenchement. La tige 146 est avantageusement montée mobile contre un ressort 147 et comprend une tête 148 accessible de l'extérieur du corps 1 en vue de sa manipulation par l'utilisateur. La figure 1e représente le bouton de déverrouillage 35 en position de repos, les mâchoires 6 étant en position de verrouillage. La figure 1f représente le bouton de déverrouillage 35 en position active, bloqué par les ergots 143 formant le moyen de blocage, la surface de came 144 repoussant la tige 146 formant le moyen de déclenchement.

Le fonctionnement de cette variante de réalisation comporte les particularités suivantes :

Pour déverrouiller l'appareil, l'utilisateur appuie sur le bouton de déverrouillage 35 pour amener les moyens de déverrouillage en position active. Les moyens de verrouillage sont alors bloqués en position active par les moyens de blocage. Les ergots 142 du bouton 35 amené en position active sont bloqués dans les cavités 143 et maintiennent écartés les bras 31, 32 portant les mâchoires 6. Les moyens de blocage maintenant les mâchoires 6 en position déverrouillée, l'utilisateur peut alors retirer le couvercle 5 du récipient 3 ou le récipient 3 surmonté du couvercle 5 du socle 2.

Pour verrouiller l'appareil l'utilisateur met en place le récipient 3 et le couvercle 5 puis repousse la tête 148 de la tige 146 formant le moyen de déclenchement contre le corps 1. L'extrémité 145 coopère avec la surface de came 144 pour repousser le bouton 35, entraînant l'échappement des ergots 142 des cavités 143. Les moyens de rappel 7 repoussent les mâchoires 6 contre le couvercle 5.

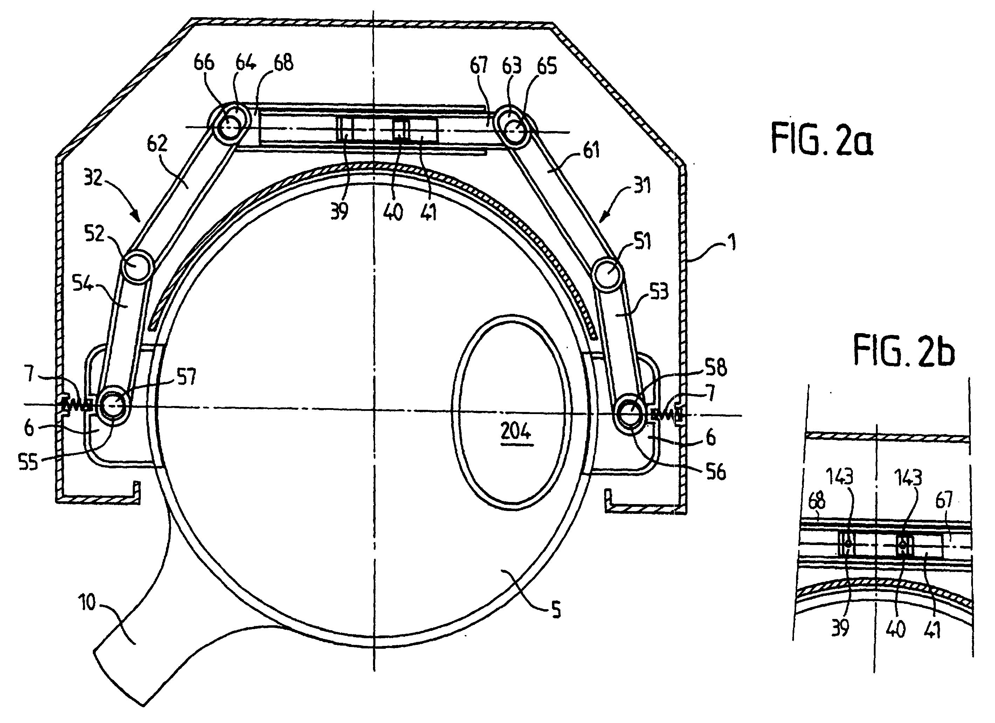

La figure 2a montre selon une vue de dessus en coupe un deuxième exemple de réalisation. Cet exemple diffère de l'exemple de réalisation précédent en ce que les bras 31, 32 sont articulés, le fonctionnement restant identique pour l'utilisateur. Chaque bras 31, 32 est monté sur un pivot 51, 52 et comporte un premier membre 53, 54 comprenant une lumière 55, 56 coopérant avec un ergot 57, 58 monté sur chacune des mâchoires 6. Chaque bras 31, 32 comporte également un second membre 61, 62 comprenant une lumière 63, 64 coopérant avec un ergot 65, 66 monté sur une glissière 67, 68. La première glissière 67 comporte la première surface de came 39 et la seconde glissière comporte la deuxième surface de came 40. La première glissière 67 comporte une ouverture 41 prévue pour le passage de la deuxième surface de came 40 ou de la surface de came 38 du bouton de déverrouillage 35.

La figure 2b montre une variante de réalisation du deuxième exemple de réalisation, comportant des moyens de blocage et des moyens de déclenchement. Les cavités 143 sont ménagées sur les surfaces de came 39, 40 des glissières 67, 68. Le fonctionnement pour l'utilisateur reste identique à celui de la variante précédente.

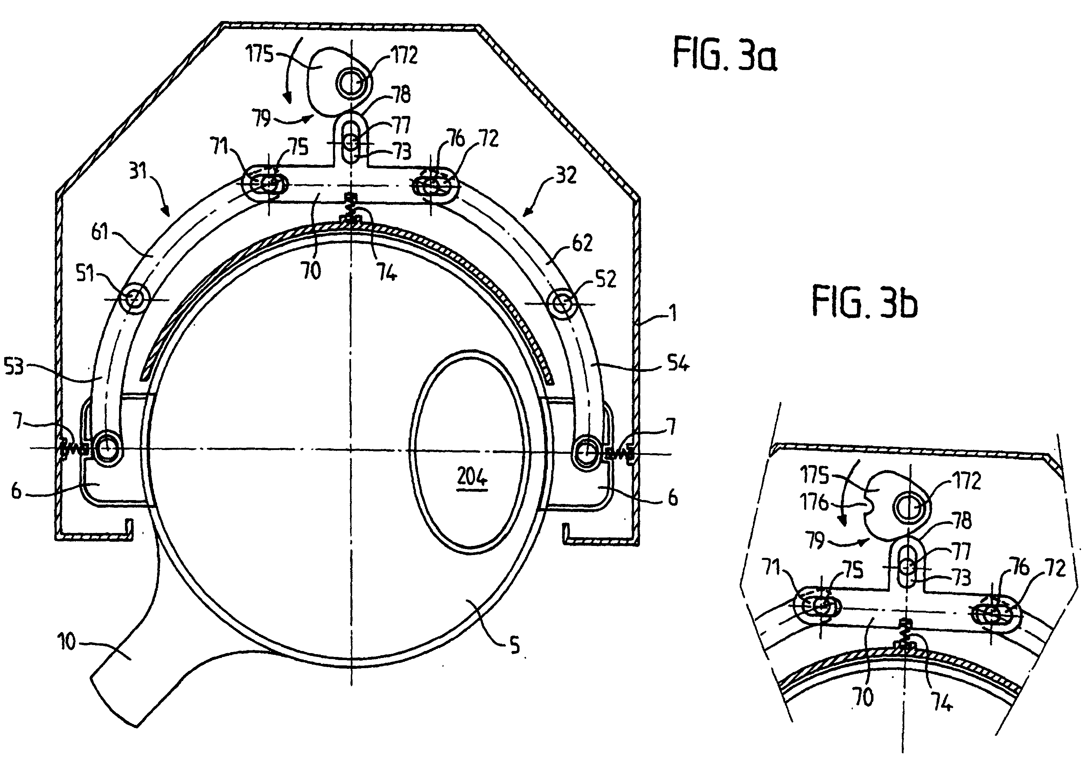

Selon un troisième exemple de réalisation, montré à la figure 3a, les moyens de déverrouillage comprennent un bouton de déverrouillage 175 rotatif.

Le bouton de déverrouillage 175 présente une surface excentrique 79 et est susceptible de tourner autour d'un axe 172. Les glissières 67 et 68 de l'exemple de réalisation précédent sont remplacées par un balancier 70 comportant deux lumières 71, 72 coopérant avec deux ergots 75, 76 montés respectivement sur chaque second membre 61, 62 des bras 31, 32. Le balancier 70 comporte une troisième lumière 73 perpendiculaire à l'axe reliant les deux lumières précédentes 71, 72, ladite lumière coopérant avec un ergot 77 solidaire du corps 1 de l'appareil. Le balancier 70 est monté mobile contre un moyen de rappel 74 et comporte une surface de commande 78 prévue pour coopérer avec le bouton de déverrouillage 175. L'excroissance 79 du bouton de déverrouillage 175 est susceptible de repousser la surface de commande 78 contre le moyen de rappel 74, la lumière 73 guidant le balancier 70 au moyen de l'ergot 77. Avantageusement le bouton de déverrouillage 175 coopère avec un moyen de rappel, non représenté aux figures.

Le fonctionnement du troisième exemple de réalisation est voisin de celui du premier ou du deuxième exemple de réalisation. La différence consiste dans le bouton de déverrouillage 175 rotatif.

La figure 3b montre une variante de réalisation du troisième exemple de réalisation, comportant des moyens de blocage et des moyens de déclenchement.

Les moyens de blocage sont formés par une cavité 176, ménagée sur le bouton 175, et susceptible de coopérer avec la surface de commande 78 du balancier 70. Les moyens de déclenchement sont formés par le bouton de déverrouillage 175.

Le fonctionnement de cette variante de réalisation comporte les particularités suivantes :

Pour déverrouiller l'appareil, l'utilisateur tourne le bouton de déverrouillage 175 pour amener les moyens de déverrouillage en position active. Les moyens de verrouillage sont alors bloqués en position active par les moyens de blocage. Le balancier 70 bloqué dans la cavité 176 du bouton 175 amené en position active tourne les bras 31, 32 sur lesquels sont montées les mâchoires 6. Les moyens de blocage maintenant les mâchoires 6 en position déverrouillée, l'utilisateur peut alors retirer le couvercle 5 du récipient 3 ou le récipient 3 surmonté du couvercle 5 du socle 2.

Pour verrouiller l'appareil l'utilisateur met en place le récipient 3 et le couvercle 5 puis tourne le bouton 175 formant le moyen de déclenchement. Le moyen de rappel 74 repousse le balancier 70 et les moyens de rappel 7 repoussent les mâchoires 6 contre le couvercle 5.

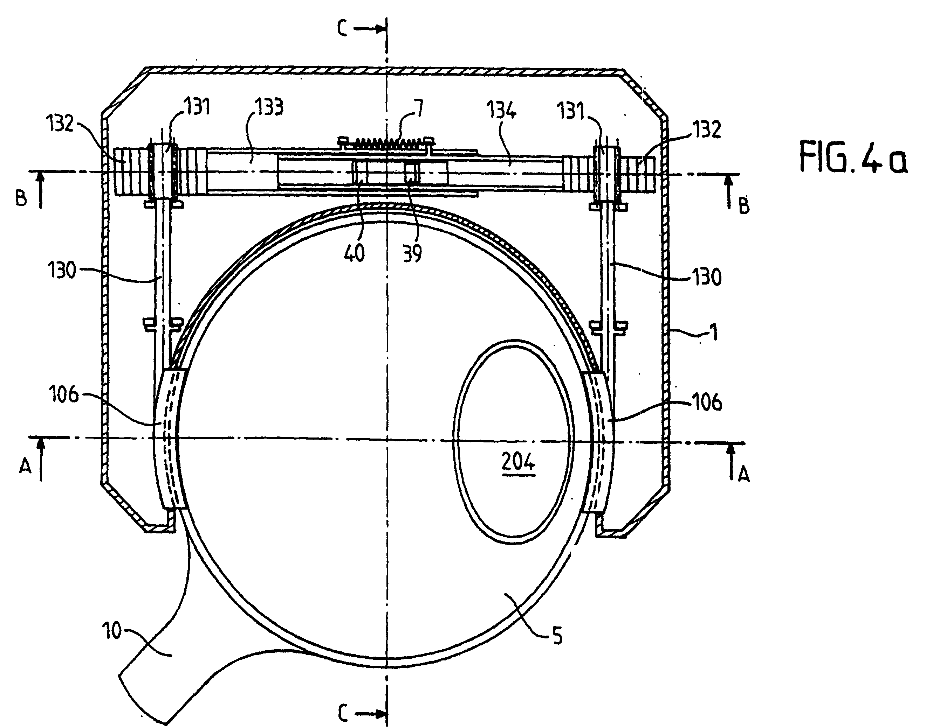

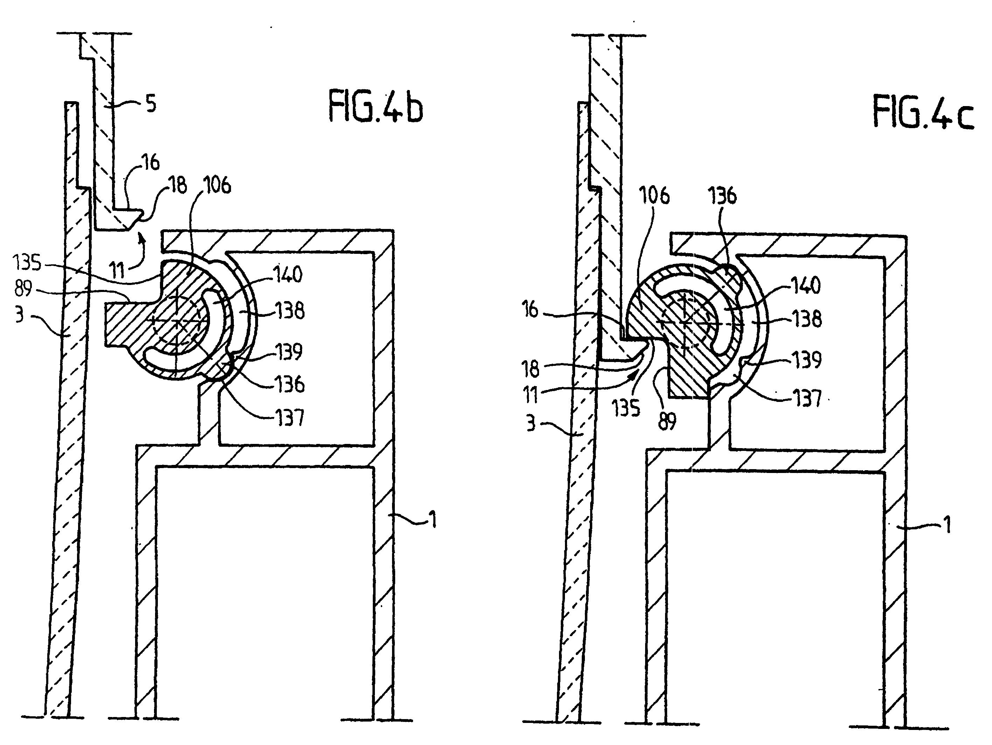

Les figures 4a, 4b et 4c montrent un quatrième exemple de réalisation, dans lequel les mâchoires 106 sont au nombre de deux et montées chacune sur un axe 130 mobile en rotation. Tel que montré à la figure 4a, chacun des axes 130 comprend une roue dentée 131 coopérant avec une crémaillère 132 disposée sur une glissière 133, 134. Les glissières 133, 134 coulissent l'une dans l'autre et comportent avantageusement chacune une surface de came 39, 40 prévue pour coopérer avec un bouton de verrouillage tel que celui présenté dans le premier exemple de réalisation.

Le moyen de rappel 7 prévu pour ramener les mâchoires 106 en position de verrouillage est disposé entre les glissières 133 et 134.

Les figures 4b et 4c montrent selon une vue partielle en coupe l'une des mâchoires 106 montée dans le corps 1. Chaque mâchoire 106 comporte un méplat 89 prévu pour coopérer avec le rebord 11 du couvercle 5 lors du verrouillage, et un méplat 135 prévu pour coopérer avec le méplat supérieur 16 du couvercle 5 afin de maintenir le couvercle 5 verrouillé. Le chanfrein inférieur 18 ménagé sur le rebord 11 du couvercle facilite avantageusement la rotation des mâchoires 106.

Avantageusement chaque mâchoire 106 comporte un bossage 136 prévu pour tourner dans un dégagement 138 à l'intérieur duquel est ménagée une excroissance 139 formant un point dur, permettant ainsi de bloquer le bossage 136 dans un logement 137.

Le bossage 136 et l'excroissance 139 forment un moyen de blocage des mâchoires 106 en position de déverrouillage, tel que représenté à la figure 4b, et permettent à l'utilisateur de disposer le couvercle 5 sur le récipient 3 ou de retirer le couvercle 5 du récipient 3 sans avoir à tenir le bouton de déverrouillage.

Ce moyen de blocage est autodébloquant, la mise en place du couvercle 5 sur le récipient 3 entraînant le dégagement du bossage 136 de l'excroissance 139 sous l'action du méplat 16 sur le méplat 135. Les figures 4b et 4c montrent un évidement annulaire partiel 140 s'étendant sur la longueur de l'une des mâchoires 106, favorisant la déformation élastique de ladite mâchoire au niveau du bossage 136 lorsque celui-ci franchit l'excroissance 139.

Les moyens de déclenchement sont formés par le rebord 11 du couvercle susceptible de coopérer avec le méplat 89 des mâchoires 106.

Le fonctionnement du quatrième exemple de réalisation allie les avantages des exemples de réalisations précédents et de leurs variantes.

Pour verrouiller l'appareil l'utilisateur dispose le couvercle 5 sur le récipient 3 mis en place sur le socle 2. Le contact du rebord 11 du couvercle 5 avec le méplat 89 de la mâchoire 106 entraîne la rotation de ladite mâchoire. Le bossage 136 étant libéré de l'excroissance 139, la mâchoire 106 pivote sous l'action du moyen de rappel 7 et le méplat 135 vient reposer sur le méplat supérieur 16 du rebord 11.

Pour déverrouiller l'utilisateur appuie sur le bouton de déverrouillage 35. Les glissières 133, 134 s'écartent et font pivoter les tiges 130 portant les mâchoires 106. L'excroissance 139 bloque alors le bossage 136. De ce fait les mâchoires 106 restent bloquées en position déverrouillée.

L'utilisateur peut ainsi verrouiller le couvercle 5 simplement en le posant sur le récipient 3 et déverrouiller le couvercle puis le retirer en n'utilisant qu'une seule main.

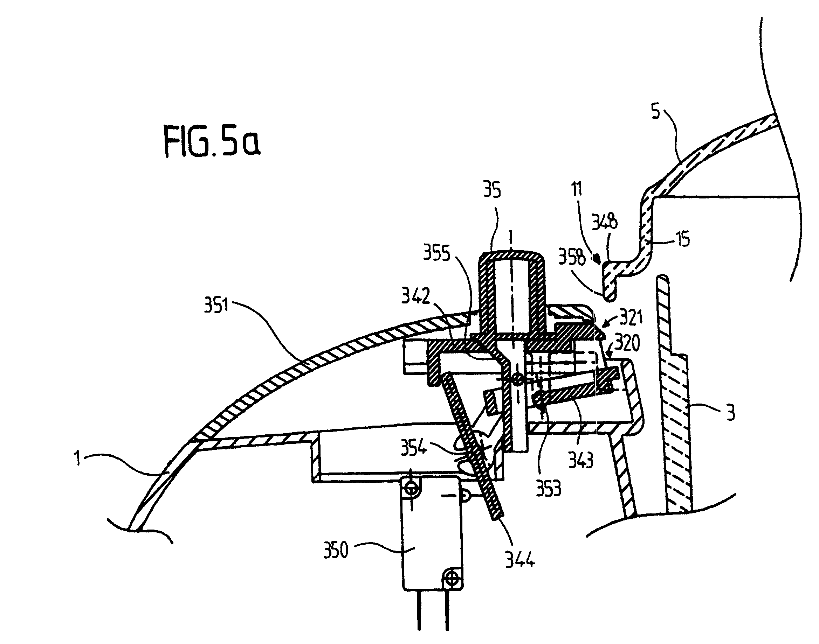

Selon un cinquième exemple de réalisation, montré aux figures 5a à 5c, les moyens de verrouillage comportent des mâchoires rotatives 106 montées dans le corps 1 mobiles entre une position de verrouillage et une position de déverrouillage. La position de déverrouillage constitue la position d'attente.

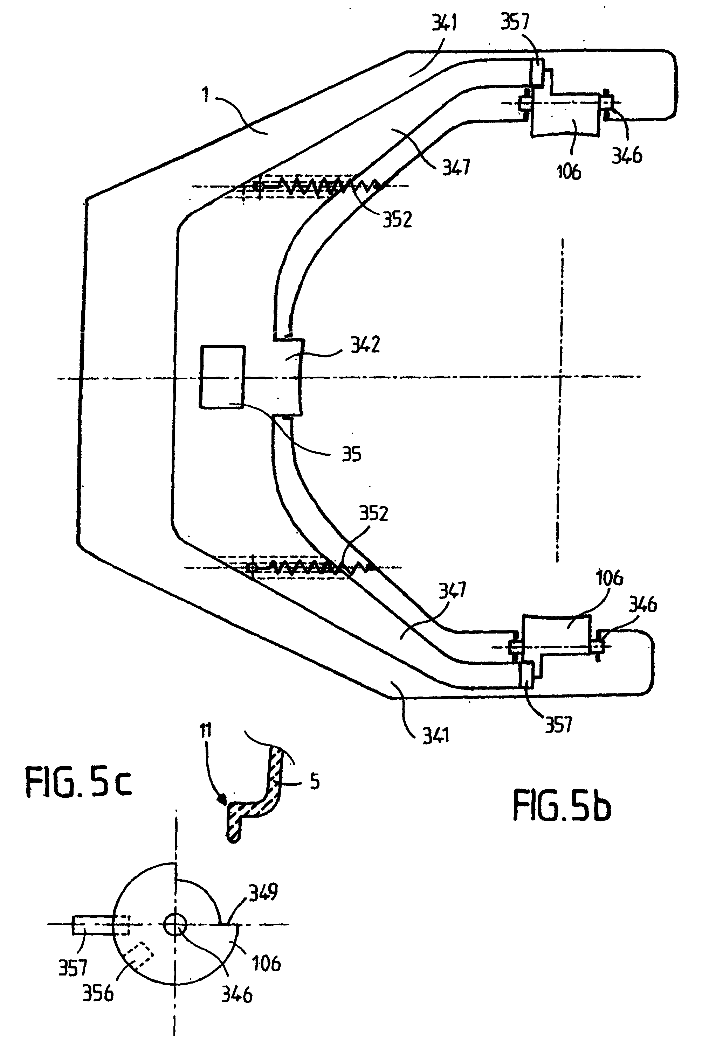

La mâchoire 106 montrée à la figure 5c est montée mobile en rotation sur un axe 346, et est représentée dans la position d'attente. La mâchoire 106 comporte une encoche 356 prévue pour recevoir une extrémité 357 d'une tige 347. La mâchoire 106 comporte également une découpe 349 prévue pour coopérer avec le rebord 11 du couvercle 5.

Tel que montré à la figure 5b, le corps 1 comporte deux bras 341 entre lesquels peut être disposé le récipient de travail (non montré à la figure). Sur chacun des bras 341 est monté la mâchoire 106 prévue pour verrouiller le couvercle 5 sur le récipient de travail 3. Les mâchoires 106 sont représentées dans leur position de verrouillage. Chaque mâchoire 106 présente un balourd formant un moyen de rappel tendant à ramener ladite mâchoire dans sa position d'attente. A titre de variante, non montrée aux figures, le moyen de rappel peut être un moyen de rappel élastique.

Un bras d'actionnement 342 monté dans le corps 1 se prolonge dans chaque bras 341 par la tige 347 dont l'extrémité 357 est susceptible de coopérer avec la mâchoire 106. Des ressorts 352 sont prévus pour déplacer le bras d'actionnement 342 en position sortie en direction du récipient de travail. Le bras d'actionnement appartient à un dispositif de sécurité montré à la figure 5a.

La figure 5a montre dans le corps 1 de l'appareil un moyen de commande 320 du dispositif de sécurité comportant une bascule 343 commandant un microrupteur 350. La bascule 343 est montée pivotante sur un axe 353. Une extrémité de la bascule 343 est susceptible d'être actionnée par le rebord 11 du couvercle 5. Le couvercle 5 comporte une jupe 15 présentant un épaulement 348 et se termine par une extrémité 358 formant le rebord 11. L'extrémité opposée de la bascule 343 comporte un logement dans lequel pivote un axe 354 d'un organe de commande 344.

Le bras d'actionnement 342 est monté mobile dans le corps 1 entre une position rentrée dans laquelle le couvercle 5 peut être mis en place sur le récipient de travail 3, représentée à la figure 5a, et une position sortie dans laquelle une extrémité du bras d'actionnement 342 vient recouvrir partiellement l'épaulement 348 du couvercle 5. Une extrémité de l'organe de commande 344 est prévue pour actionner le bouton du microrupteur 350 alors que l'autre extrémité coopère avec le bras d'actionnement.

Le dispositif de sécurité est associé aux moyens de verrouillage du couvercle 5 sur le récipient 3 formés par les mâchoires 106. Un bouton de déverrouillage 35 des moyens de verrouillage est monté mobile dans le corps 1 entre une position enfoncée de déverrouillage dans laquelle le couvercle peut être mis en place ou retiré et une position relevée dans laquelle le couvercle est verrouillé sur le récipient de travail. Dans la figure 5a le bras d'actionnement est en position rentrée et le bouton de déverrouillage est représenté en position de déverrouillage. Le bouton 35 comporte une surface de came 355 susceptible d'être actionnée par le bras d'actionnement 342. Un capot 351 monté sur le corps 1 recouvre les éléments du dispositif de verrouillage.

Le fonctionnement de ce cinquième exemple de réalisation est le suivant.

Lorsque le couvercle 5 est retiré du récipient 3 les mâchoires 106 occupent leur position d'attente.

Lorsque le couvercle 5 est en place sur le récipient 3 le rebord 11 actionne à la fois la bascule 343 et les mâchoires 106. La bascule 343 pivote sur l'axe 353 et rapproche l'organe de commande 344 du microrupteur 350. Les mâchoires 106 pivotent sur les axes 346 et les extrémités 357 des tiges 347 du bras d'actionnement 342 entrent dans les encoches 356. Les mâchoires 106 sont alors bloquées en position de verrouillage. Sous l'action des ressorts 352 le bras d'actionnement 342 prend sa position sortie, position dans laquelle il vient recouvrir partiellement l'épaulement 348 du couvercle 5. Lors de ce déplacement le bras d'actionnement 342 entraîne la remontée du bouton de déverrouillage 35 en position verrouillée par l'intermédiaire de la came 355, et actionne l'organe de commande 344 qui vient commander le microrupteur 350.

Pour déverrouiller l'utilisateur appuie sur le bouton de déverrouillage 35, lequel repousse le bras d'actionnement 342 qui libère alors les mâchoires 106. L'utilisateur peut retirer le couvercle 5 du récipient 3. Lorsque le couvercle 5 est retiré les mâchoires 106 reprennent leur position d'attente.

Avantageusement, l'appareil comporte un dispositif de soulèvement 360 du couvercle 5, constitué par des moyens élastiques susceptibles d'être déformés lorsque le couvercle 5 est verrouillé sur le récipient 3, et susceptibles de soulever le couvercle 5 du récipient 3 lorsque les mâchoires sont amenées en position de déverrouillage.

Selon le mode de réalisation représenté aux figures 7a et 7b, les mâchoires 6 sont montées sur le corps 1 et les moyens élastiques sont constitués par une pluralité de ressorts 361, dont un seul est représenté aux figures, lesdits ressorts étant montés dans le couvercle 5, et leur extrémité libre 364 étant susceptible de coulisser dans une rainure 362 ménagée dans une paroi 365 du couvercle 5. Avantageusement les ressorts 361 sont au moins au nombre de trois. La figure 7a représente le couvercle 5 verrouillé sur le récipient 3 au moyen des mâchoires 6, dont une seule est représentée. Les ressorts 361 montés dans un logement 363 du couvercle 5 sont comprimés par le récipient 3. La figure 7b représente le couvercle 5 déverrouillé, les mâchoires 6, dont une seule est représentée, étant en position de déverrouillage. Les ressorts 361 soulèvent le couvercle 5 du récipient 3.

Avantageusement le moyen élastique est susceptible de soulever le couvercle 5 de sorte que les mâchoires reprenant leur position de verrouillage ne soient pas susceptibles de verrouiller le couvercle 5 sur le récipient 3. Tel que représenté à la figure 8b, le chanfrein supérieur 14 de la mâchoire 6 est susceptible de repousser le chanfrein inférieur 18 du rebord 11 du couvercle 5 soulevé sur le récipient 3. D'autres dispositions sont envisageables. A titre d'exemple les moyens élastiques pourraient soulever le rebord 11 au-dessus des mâchoires 6.

A titre de variante le dispositif de soulèvement 360 peut comporter des moyens élastiques autre que les ressorts 361, par exemple un anneau en élastomère. A titre de variante également, les moyens élastiques peuvent être montés sur le récipient 3, voire sur le corps 1. A titre de variante encore les mâchoires peuvent être des mâchoires rotatives 106.

Avantageusement les moyens élastiques du dispositif de soulèvement 360 du couvercle 5 soulèvent le couvercle 5 du récipient 3. Avantageusement encore les moyens élastiques soulèvent le couvercle 5 de sorte que les mâchoires reprenant leur position de verrouillage ne soient pas susceptibles de verrouiller le couvercle 5 sur le récipient 3. L'utilisateur peut ainsi actionner les moyens de déverrouillage d'une main, puis retirer, avantageusement de la même main, le couvercle 5 reposant sur les mâchoires.

L'invention n'est nullement limitée strictement aux exemples de réalisation décrits précédemment, mais englobe de nombreuses modifications ou améliorations.

Notamment, à titre d'exemple complémentaire il est possible d'envisager des mâchoires rotatives associées à un bouton de déverrouillage rotatif.

Les bras portant les mâchoires des premiers et deuxièmes exemples de réalisation peuvent être remplacés par des bras mobiles en rotation autour d'un axe sensiblement vertical.

L'invention peut être aussi appliquée à un appareil comportant un récipient et un couvercle dont la géométrie n'est pas de révolution, ou à un récipient et à un couvercle dont les parties en regard ne présentent pas d'axe de symétrie et nécessitent un indexage du couvercle sur le récipient selon une position donnée.

L'invention peut être aussi appliquée à un appareil comportant un récipient et un couvercle dont les parties en regard présentent un axe de symétrie, le corps du récipient n'étant pas de géométrie de révolution, un tel appareil permettant une liberté de positionnement en rotation du couvercle sur le récipient lors de l'introduction du couvercle sur le récipient.

La liberté de positionnement en rotation peut être totale (sur 360°), partielle (sur un ou plusieurs secteurs angulaires) ou multiple (selon plusieurs positions).

L'invention peut être également appliquée à un appareil comportant un récipient et un couvercle mis en place sur le récipient par un mouvement uniaxial selon un axe incliné, distinct de l'axe vertical.

Il est également possible de remplacer la cheminée centrale par une traversée étanche de paroi permettant la transmission du mouvement à l'outil, tel que connu sur les appareils électroménagers de type mélangeurs, prévus pour la réalisation de préparations liquides.

### POSSIBILITES D'APPLICATION INDUSTRIELLE

L'invention trouve son application dans le domaine technique général des appareils électroménagers de préparation culinaire, du genre robot ménagers multi-usages.

## Revendications

1. Appareil électroménager de préparation culinaire, du genre robot ménager comportant un corps (1) formant un socle (2) prévu pour recevoir un récipient de travail (3) dans lequel est susceptible d'être disposé un organe de travail rotatif (4) entraîné par un moteur disposé dans le corps (1), un couvercle (5) prévu pour fermer le récipient de travail (3), et des moyens de verrouillage du couvercle (5) sur le récipient de travail (3) disposé sur le socle (2), le socle (2) et le récipient (3) comportant des moyens de blocage en rotation, **caractérisé en ce que**:
les moyens de verrouillage comportent au moins deux mâchoires (6 ; 106) montées mobiles sur le corps (1) entre une position de verrouillage dans laquelle elles engagent le couvercle (5) pour le bloquer verticalement et
une position de déverrouillage dans laquelle le couvercle (5) peut être retiré, ces mâchoires étant mobiles à l'encontre d'au moins un moyen de rappel (7) vers l'une des deux positions,
et **en ce que** l'appareil comporte des moyens de déverrouillage (35 ; 175) montés mobiles sur le corps entre une position de repos dans laquelle les mâchoires (6 ; 106) sont susceptibles de verrouiller le couvercle (5) sur le récipient (3), et une position active dans laquelle les mâchoires (6 ; 106) sont amenées en leur position de déverrouillage.

2. Appareil selon la revendication 1, **caractérisé en ce que** les mâchoires (6 ; 106) sont montées symétriques par rapport à l'axe vertical passant par le centre de gravité du récipient (3) et du couvercle (5).

3. Appareil selon l'une des revendications 1 ou 2, **caractérisé en ce que** le couvercle (5) et au moins le haut du récipient (3) présentent une géométrie de révolution.

4. Appareil selon l'une des revendications 1 à 3, **caractérisé en ce que** les mâchoires (6 ; 106) sont associées à des moyens de rappel élastiques (7), la position de rappel étant la position de verrouillage.

5. Appareil selon l'une des revendications 1 à 3, **caractérisé en ce que** les mâchoires (106) sont associées à des moyens de rappel formés par un balourd ou à des moyens de rappel élastiques, la position de rappel étant la position de déverrouillage.

6. Appareil selon l'une des revendications 1 à 5, **caractérisé en ce que** les moyens de déverrouillage (35 ; 175) agissent contre un moyen de rappel (36 ; 7 ; 352).

7. Appareil selon l'une des revendications 1 à 6, **caractérisé en ce que** les moyens de déverrouillage sont formés par un bouton de déverrouillage (35) présentant une course selon un axe sensiblement parallèle à la direction d'introduction du récipient de travail (3) sur le socle (2).

8. Appareil selon l'une des revendications 1 à 6, **caractérisé en ce que** les moyens de déverrouillage comprennent un bouton de déverrouillage (175) rotatif.

9. Appareil selon l'une des revendications 1 à 8, **caractérisé en ce que** les mâchoires (6) sont montées mobiles radialement entre leur position de verrouillage et leur position de déverrouillage.

10. Appareil selon l'une des revendications 1 à 9, **caractérisé en ce qu'**il comporte deux bras (31, 32) portant chacun au moins une mâchoire (6).

11. Appareil selon l'une des revendications 1 à 8, **caractérisé en ce qu'**il comporte deux mâchoires (106) montées chacune sur un axe (130 ; 346) mobile en rotation.

12. Appareil selon les revendications 4, 6 et 10, **caractérisé en ce que** les moyens de déverrouillage sont formés par un bouton de déverrouillage (35) monté contre le moyen de rappel (36), ledit bouton comportant deux surfaces de came (37, 38) susceptibles de repousser respectivement une première surface de came (39) ménagée sur le premier bras (31) et une deuxième surface de came (40) ménagée sur le second bras (32).

13. Appareil selon les revendications 4, 6 et 11, **caractérisé en ce que** chacun des axes (130) comprend une roue dentée (131) coopérant avec une crémaillère (132) disposée sur une glissière (133, 134), les glissières (133, 134) coulissant l'une dans l'autre et comportant chacune une surface de came (39, 40) prévue pour coopérer avec un bouton de déverrouillage (35), monté contre le moyen de rappel (36), ledit bouton formant les moyens de déverrouillage.

14. Appareil selon les revendications 5, 6 et 11, **caractérisé en ce qu'**il comporte un bras de verrouillage (342) monté dans le corps (1) mobile contre des ressorts (352), ledit bras de verrouillage étant prévu pour bloquer en position de verrouillage les mâchoires (106) montées chacune sur l'un des axes (346), ledit bras de verrouillage étant susceptible d'être manoeuvré par un bouton de déverrouillage (35) pour libérer lesdites mâchoires.

15. Appareil selon l'une des revendications 4, 6, 7, 8, 9, 10, 11 ou 12 **caractérisé en ce qu'**il comporte des moyens de blocage (142 ; 176 ; 136) mobiles entre une position de repos dans laquelle les mâchoires (6 ; 106) sont susceptibles de verrouiller le couvercle (5) sur le récipient (3) sous l'action des moyens de rappel (7), et une position active dans laquelle les mâchoires (6 ; 106) occupent leur position de déverrouillage, ainsi que des moyens de déclenchement (146 ; 175 ; 11), aptes à agir sur les moyens de blocage (142 ; 176 ; 136) pour leur faire occuper leur position de repos.

16. Appareil selon l'une des revendications 4, 6, 7, 8, 9, 10, 11 ou 12, **caractérisé en ce que** les mâchoires (6) comportent un chanfrein (14) prévu pour coopérer avec le couvercle (5) pour repousser les mâchoires (6) contre les moyens de rappel (7) lors de l'introduction du couvercle (5) sur le récipient (3) disposé sur le socle (2).

17. Appareil selon l'une des revendications 1 à 16, **caractérisé en ce que** le récipient de travail (3) et le corps (1) comportent des moyens de blocage en rotation inférieurs.

18. Appareil selon la revendication 17, **caractérisé en ce que** les moyens de blocage en rotation inférieurs sont formés par des nervures annulaires ondulées (180) ménagées sous un fond (28) du récipient (3), lesdites nervures annulaires (180) étant prévues pour coopérer avec des nervures radiales (181) ménagées sur le socle (2) du corps (1).

19. Appareil selon l'une des revendications 1 à 18, **caractérisé en ce qu'**il comporte des moyens élastiques, montés sur le couvercle (5) ou le récipient (3), lesdits moyens étant susceptibles d'être déformés lorsque le couvercle (5) est verrouillé sur le récipient (3), et de soulever le couvercle (5) du récipient (3) lorsque les mâchoires (6 ; 106) sont amenées en position de déverrouillage.

## Patentansprüche

1. Haushaltselektrogerät zur Kochvorbereitung der Art eines Haushaltsroboters, mit einem Körper (1), der einen Sockel (2) bildet, der zur Aufnahme eines Arbeitsbehälters (3) vorgesehen ist, in dem ein Dreharbeitsorgan (4) angeordnet sein kann, das von einem in dem Körper (1) angeordneten Motor angetrieben wird, einem Deckel (5), der zum Schließen des Arbeitsbehälters (3) vorgesehen ist, und Mitteln zum Verriegeln des Deckels (5) an dem Arbeitsbehälter (3), der auf dem Sockel (2) angeordnet ist, wobei der Sockel (2) und der Behälter (3) Drehblockierungsmittel aufweisen, **dadurch gekennzeichnet, daß**: die Verriegelungsmittel wenigstens zwei Backen (6; 106) aufweisen, die an dem Körper (1) zwischen einer Verriegelungsposition, in der sie an dem Deckel (5) angreifen, um ihn vertikal zu blockieren, und einer Entriegelungsposition beweglich angebracht sind, in der der Deckel (5) abgenommen werden kann, wobei diese Backen gegen wenigstens ein Rückstellmittel (7) in eine der beiden Positionen beweglich sind, und daß das Gerät Entriegelungsmittel (35; 175) aufweist, die an dem Körper zwischen einer Ruheposition, in der die Backen (6; 106) den Deckel (5) an dem Behälter (3) verriegeln können, und einer aktiven Position beweglich angebracht sind, in der die Backen (6; 106) in ihre Entriegelungsposition gebracht sind.

2. Gerät nach Anspruch 1, **dadurch gekennzeichnet, daß** die Backen (6; 106) symmetrisch bezüglich der vertikalen Achse angebracht sind, die durch den Schwerpunkt des Behälters (3) und des Deckels (5) verläuft.

3. Gerät nach einem der Ansprüche 1 oder 2, **dadurch gekennzeichnet, daß** der Deckel (5) und wenigstens das Oberteil des Behälters (3) eine rotationssymmetrische Geometrie aufweisen.

4. Gerät nach einem der Ansprüche 1 bis 3, **dadurch gekennzeichnet, daß** die Backen (6; 106) elastischen Rückstellmitteln (7) zugeordnet sind, wobei die Rückstellposition die Verriegelungsposition ist.

5. Gerät nach einem der Ansprüche 1 bis 3, **dadurch gekennzeichnet, daß** die Backen (106) Rückstellmitteln, die durch eine Unwucht gebildet sind, oder elastischen Rückstellmitteln zugeordnet sind, wobei die Rückstellposition die Entriegelungsposition ist.

6. Gerät nach einem der Ansprüche 1 bis 5, **dadurch gekennzeichnet, daß** die Entriegelungsmittel (35; 175) gegen ein Rückstellmittel (36; 7; 352) wirken.

7. Gerät nach einem der Ansprüche 1 bis 6, **dadurch gekennzeichnet, daß** die Entriegelungsmittel durch einen Entriegelungsknopf (35) gebildet sind, der einen Hub entlang einer Achse aufweist, die im wesentlichen parallel zur Einführungsrichtung des Arbeitsbehälters (3) auf den Sockel (2) ist.

8. Gerät nach einem der Ansprüche 1 bis 6, **dadurch gekennzeichnet, daß** die Entriegelungsmittel einen Drehentriegelungsknopf (175) aufweisen.

9. Gerät nach einem der Ansprüche 1 bis 8, **dadurch gekennzeichnet, daß** die Backen (6) zwischen ihrer Verriegelungsposition und ihrer Entriegelungsposition radial beweglich angebracht sind.

10. Gerät nach einem der Ansprüche 1 bis 9, **dadurch gekennzeichnet, daß** es zwei Arme (31; 32) aufweist, die jeweils wenigstens eine Backe (6) tragen.

11. Gerät nach einem der Ansprüche 1 bis 8, **dadurch gekennzeichnet, daß** es zwei Backen (106) aufweist, die jeweils an einer drehbeweglichen Achse (130; 346) angebracht sind.

12. Gerät nach den Ansprüchen 4, 6 und 10, **dadurch gekennzeichnet, daß** die Entriegelungsmittel durch einen Entriegelungsknopf (35) gebildet sind, der gegen das Rückstellmittel (36) angebracht ist, wobei der Knopf zwei Nockenflächen (37, 38) aufweist, die eine erste Nockenfläche (39), die an dem ersten Arm (31) vorgesehen ist, bzw. eine zweite Nockenfläche (40) zurückdrücken können, die an dem zweiten Arm (32) vorgesehen ist.

13. Gerät nach den Ansprüchen 4, 6 und 11, **dadurch gekennzeichnet, daß** jede der Achsen (130) ein Zahnrad (131) aufweist, das mit einer Zahnstange (132) zusammenwirkt, die an einer Gleitschiene (133, 134) angeordnet ist, wobei die Gleitschienen (133, 134) ineinander gleiten und jeweils eine Nockenfläche (39, 40) aufweisen, die gegen das Rückstellmittel (36) angebracht ist, wobei der Knopf die Entriegelungsmittel bildet.

14. Gerät nach den Ansprüchen 5, 6 und 11, **dadurch gekennzeichnet, daß** es einen Verriegelungsarm (342) aufweist, der in dem Körper (1) beweglich gegen Federn (352) angebracht ist, wobei der Verriegelungsarm dazu vorgesehen ist, die Backen (106), die jeweils an einer der Achsen (346) angebracht sind, in Verriegelungsposition zu blockieren, wobei der Verriegelungsarm von einem Entriegelungsknopf (35) betätigt werden kann, um die Backen frei zu geben.

15. Gerät nach einem der Ansprüche 4, 6, 7, 8, 9, 10, 11 oder 12, **dadurch gekennzeichnet, daß** es Blockierungsmittel (142; 176; 136), die zwischen einer Ruheposition, in der die Backen (6; 106) unter der Wirkung der Rückstellmittel (7) den Deckel (5) an dem Behälter (3) verriegeln können, und einer aktiven Position beweglich sind, in der die Backen (6; 106) ihre Entriegelungsposition einnehmen, sowie Auslösemittel (146; 175; 11) aufweist, die dazu geeignet sind, auf die Blockierungsmittel (142; 176; 136) einzuwirken, damit sie ihre Ruheposition einnehmen.

16. Gerät nach einem der Ansprüche 4, 6, 7, 8, 9, 10, 11 oder 12, **dadurch gekennzeichnet, daß** die Backen (6) eine Abschrägung (14) aufweisen, die zum Zusammenwirken mit dem Deckel (5) vorgesehen sind, um die Backen (6) gegen die Rückstellmittel (7) zurückzudrücken, wenn der Deckel (5) auf den auf dem Sockel (2) angeordneten Behälter (3) aufgesetzt wird.

17. Gerät nach einem der Ansprüche 1 bis 16, **dadurch gekennzeichnet, daß** der Arbeitsbehälter (3) und der Körper (1) untere Drehblockierungsmittel aufweisen.

18. Gerät nach Anspruch 17, **dadurch gekennzeichnet, daß** die unteren Drehblockierungsmittel durch gewellte, ringförmige Rippen (180) ausgebildet sind, die unter einem Boden (28) des Behälters (3) vorgesehen sind, wobei die ringförmigen Rippen (180) zum Zusammenwirken mit radialen Rippen (181) vorgesehen sind, die an dem Sockel (2) des Körpers (1) vorgesehen sind.

19. Gerät nach einem der Ansprüche 1 bis 18, **dadurch gekennzeichnet, daß** es elastische Mittel aufweist, die an dem Deckel (5) oder dem Behälter (3) angebracht sind, wobei die Mittel verformt werden können, wenn der Deckel (5) auf dem Behälter (3) verriegelt ist, und den Deckel (5) des Behälters (3) anheben können, wenn die Backen (6; 106) in die Entriegelungsposition gebracht sind.

## Claims

1. A household electrical kitchen appliance of the food processor type comprising a body (1) forming a base (2) designed to receive a working receptacle (3) suitable for receiving a rotary working member (4) driven by a motor housed in the body (1), a lid (5) provided for closing the working receptacle (3), and locking means for locking the lid (5) on the working receptacle (3) in place on the base (2), the base (2) and the receptacle (3) including means for preventing them from turning, the appliance being **characterized in that**:
the locking means comprise at least two jaws (6; 106) movably mounted on the body (1) to move between a locking position in which they engage the lid (5) to prevent it from moving vertically, and an unlocking position in which the lid (5) can be withdrawn, the jaws being movable against at least one return means (7) urging them towards one of the two positions; and
**in that** the appliance includes unlocking means (35; 175) movably mounted on the body to move between a rest position in which the jaws (6; 106) are suitable for locking the lid (5) on the receptacle (3), and an active position in which the jaws (6; 106) are brought into their unlocking position.

2. An appliance according to claim 1, **characterized in that** the jaws (6; 106) are mounted symmetrically about the vertical axis passing through the center of gravity of the receptacle (3) and the lid (5).

3. An appliance according to claim 1 or claim 2, **characterized in that** the lid (5) and at least the top of the receptacle (3) are circularly symmetrical.

4. An appliance according to any one of claims 1 to 3, **characterized in that** the jaws (6; 106) are associated with resilient return means (7), the return position being the locking position.

5. An appliance according to any one of claims 1 to 3, **characterized in that** the jaws (106) are associated with return means formed by being unbalanced or with resilient return means, the return position being the unlocking position.

6. An appliance according to any one of claims 1 to 5, **characterized in that** the unlocking means (35; 175) act against return means (36; 7; 352).

7. An appliance according to any one of claims 1 to 6, **characterized in that** the unlocking means are formed by an unlocking button (35) presenting a stroke along an axis that is substantially parallel to the direction in which the working receptacle (3) is introduced onto the base (2).

8. An appliance according to any one of claims 1 to 6, **characterized in that** the unlocking means comprise a turnable unlocking button (175).

9. An appliance according to any one of claims 1 to 8, **characterized in that** the jaws (6) are mounted to move radially between their locking and unlocking positions.

10. An appliance according to any one of claims 1 to 9, **characterized in that** it has two arms (31, 32) each carrying at least one jaw (6).

11. An appliance according to any one of claims 1 to 8, **characterized in that** it has two jaws (106) each mounted on a respective turnable shaft (130; 346).

12. An appliance according to claims 4, 6, and 10, **characterized in that** the unlocking means are formed by an unlocking button (35) mounted against the return means (36), said button having two cam surfaces (37, 38) suitable for pushing respectively against a first cam surface (39) provided on the first arm (31) and a second cam surface (40) provided on the second arm (32).

13. An appliance according to claims 4, 6, and 11, **characterized in that** each of the shafts (130) carries a toothed wheel (131) co-operating with a rack (132) placed on a slider (133, 134), the sliders (133, 134) sliding one in another and each having a cam surface (39, 40) designed to co-operate with an unlocking button (35) mounted against the return means (36), said button forming the unlocking means.

14. An appliance according to claims 5, 6, and 11, **characterized in that** it includes a locking arm (342) mounted in the body (1) to move against springs (352), said locking arm being designed to block the jaws (106) mounted on respective shafts (346) in the locking position, said locking arm being suitable for being driven by an unlocking button (35) to release said jaws.

15. An appliance according to any one of claims 4, 6, 7, 8, 9, 10, 11, or 12, **characterized in that** it includes blocking means (142; 176; 136) movable between a rest position in which the jaws (6; 106) are suitable for locking the lid (5) on the receptacle (3) under drive from return means (7), and an active position in which the jaws (6; 106) occupy their unlocking position, and release means (146; 175; 11) suitable for acting on the blocking means (142; 176; 136) to cause them to occupy their rest position.

16. An appliance according to any one of claims 4, 6, 7, 8, 9, 10, 11, or 12, **characterized in that** each jaw (6) has a chamfer (14) for co-operating with the lid (5) to cause the jaws (6) to be pushed back against the return means (7) while the lid (5) is being introduced onto the receptacle (3) when placed on the base (2).

17. An appliance according to any one of claims 1 to 16, **characterized in that** the working receptacle (3) and the body (1) include bottom means for blocking them in rotation.

18. An appliance according to claim 17, **characterized in that** the bottom means for blocking rotation are formed by undulating annular ribs (180) formed beneath a bottom wall (28) of the receptacle (3), said annular ribs (180) being designed to co-operate with radial ribs (181) provided on the base (2) of the body (1).

19. An appliance according to any one of claims 1 to 18, **characterized in that** it includes resilient means mounted on the lid (5) or the receptacle (3), said resilient means being suitable for being deformed while the lid (5) is locked on the receptacle (3), and for lifting the lid (5) from the receptacle (3) when the jaws (6; 106) are brought into the unlocking position.
